Europäisches Patentamt

European Patent Office

Office européen des brevets

(11) Veröffentlichungsnummer: **0 286 832**

**A2**

## (12) EUROPÄISCHE PATENTANMELDUNG

(21) Anmeldenummer: 88103686.7

(51) Int. Cl.⁴: **G02B 27/00**

(22) Anmeldetag: 09.03.88

(30) Priorität: 10.04.87 DE 3712287

(43) Veröffentlichungstag der Anmeldung:
19.10.88 Patentblatt 88/42

(84) Benannte Vertragsstaaten:
CH DE FR GB LI

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Scharfenberg, Gottfried**
**Buchenstrasse 18**
**D-8011 Siegertsbrunn(DE)**

(54) Vorrichtung zur Übertragung von optischen Informationen.

(57) Die Erfindung betrifft eine Vorrichtung zur Übertragung von optischen Informationen mit einem im wesentlichen ortsfesten Sender und einem beweglichen Empfänger, der mit einem Helm verbunden ist und der eine Eingangsoptik aufweist sowie einen zum Auge einer Bedienungsperson führenden Lichtleiter; der Sender ist dabei ein Projektor, der sowohl um seine senkrechten Achse als auch um eine waagrechte Achse sich senkrecht zur Lichtausbreitungsrichtung erstreckenden Achse schwenkbar ist und der einen Nachführsensor aufweist, wobei dem Empfänger ein Reflektor zugeordnet ist.

EP 0 286 832 A2

FIG. 2

## Vorrichtung zur Übertragung von optischen Informationen

Die Erfindung betrifft eine Vorrichtung zur Übertragung von optischen Informationen mit einem im wesentlichen ortsfesten Sender und einem beweglichen Empfänger, der mit einem Helm verbunden ist und der eine Eintrittsoptik aufweist sowie einen zum Auge einer Bedienungsperson führenden geschlossenen Strahlengang.

In Führungsfahrzeugen oder Kommandoständen ist oftmals außer den direkt visuell wahrnehmbaren Informationen die Wahrnehmung von unveränderlichen Informationen z.B. einer Kartendarstellung mit eingeblendeter Lagedarstellung, erforderlich. Eine derartige Kartendarstellung kann z.B. auf Diapositiven festgehalten sein, wobei die darin enthaltenen Informationen einer Bedienungsperson zugeführt werden müssen.

Aus der US-PS 41 53 913 ist eine Vorrichtung zur Übertragung von optischen Informationen bekannt, insbesondere für den Piloten eines Luftfahrzeuges, die einen ortsfesten Sender aufweist sowie einen beweglichen Empfänger, der mit einem Helm verbunden ist, wobei der Empfänger eine Eintrittsoptik aufweist sowie einen zum Auge des Piloten führenden Lichtwellenleiter, der die zu übertragenden Informationen über eine geeignete Ausgangsoptik auf einen geneigt angeordneten halbdurchlässigen Spiegel lenkt, so daß diese einer direkt betrachteten Szene überlagert werden. Die Eingangsoptik des Empfängers wird hierbei von dem Bild einer Kathodenstrahlröhre oder eines Fadenkreuzes beaufschlagt und führt die optischen Informationen über ein Bündel aus optischen Fasern dem halbdurchlässigen Spiegel zu. Dabei sind Vorkehrungen getroffen zur räumlichen Konstanthaltung der dem Piloten zu übermittelnden optischen Informationen, die z.B. eine Zieldarstellung enthalten. Diese bekannte Vorrichtung weist jedoch noch den Nachteil eines hohen Gewichts und einer beschränkten Be wegungsfreiheit der den Helm tragenden Bedienungsperson auf.

Aufgabe der vorliegenden Erfindung ist es, eine Vorrichtung zur Übertragung von optischen Informationen zu schaffen, bei deren Verwendung eine maximale Bewegungsfreiheit für die Bedienungsperson gewährleistet ist, die einfach im Aufbau ist, die das Gewicht des Helmes nur geringfügig erhöht und die sicherstellt, daß der Schwerpunkt des Helmes weiterhin in der Kopfmitte liegt.

Ausgehend von einer Vorrichtung der eingangs näher genannten Art wird zur Lösung dieser Aufgabe vorgeschlagen, daß der Sender ein Projektor ist, der sowohl um seine senkrechte Achse als auch um eine waagrechte, sich senkrecht zur Lichtausbreitungsrichtung erstreckenden Achse schwenkbar ist, daß der Projektor einen Nachführsensor auf

weist und daß dem Empfänger ein Reflektor für den vom Nachführsensor ausgesandten Lichtstrahl bzw. für einen Teil der optischen Informationen zugeordnet ist.

Vorteilhafterweise weist der Projektor eine Anordnung zur Erzeugung von Symbolen auf, die den eigentlichen zu übertragenden optischen Informationen überlagert werden.

Der dem Empfänger zugeordnete Reflektor kann entweder ein Prismenreflektor oder ein Konvex-Spiegel sein.

Der Empfänger ist vorzugsweise nur mit einer einem Auge zugewandten Ausgangsoptik zur Erzeugung einer monokularen Darstellung des virtuellen Bildes der übertragenen Informationen versehen.

Mit der erfindungsgemäßen Vorrichtung wird eine Darstellung von Karten z.B. in Form von $50 \times 50$ mm² Diapositiven mit eingeblendeter Lagedarstellung ermöglicht, wobei aufgrund der direkten Übertragung des projizierten Bildes in einem parallelen offenen Strahlengang, bei dem der Projektionsstrahl dem Helm nachge führt wird, keine aktiven Bauelemente am Helm erforderlich sind, und damit auch keine separate Energieversorgung oder anderweitige mechanische oder elektrische Verbindung zum Helm. Das Gewicht des Helms samt dem zugehörigen Empfänger kann damit auf einen Wert von kleiner 800 Gramm gehalten werden, wobei sichergestellt ist, daß der Schwerpunkt weiterhin in Kopfmitte liegt.

Durch die Ausgestaltung des Senders als kardanisch aufgehängten Projektor, in dem durch die erfindungsgemäße Anordnung zur Erzeugung von Symbolen z.B. durch LCD, Laserstrahlen oder dgl., diese dem Dia der Karte und zu ihr positionsbezogen eingeblendet werden, wird der Vorteil erzielt, daß im parallelen zum Empfänger gerichteten Strahlengang die komplette Lagedarstellung vorhanden ist.

Im folgenden wird die Erfindung anhand der Zeichnung näher erläutert, in der zwei vorteilhafte Ausführungsbeispiele dargestellt sind.

In den Figuren, in denen gleiche Teile mit gleichen Bezugszeichen versehen sind, ist mit 1 der Helm einer Bedienungsperson bezeichnet, die z.B. Führungsaufgaben in einem Fahrzeug oder einem Kommandostand wahrnimmt, z.B. unter Zuhilfenahme eines Bildschirmes 2; anstelle des Bildschirmes können auch direkte Beobachtungen einer Szene stehen.

Zur zusätzlichen Übertragung von optischen Informationen ist ein Sender in Form eines Projektors 2 vorgesehen, der z.B. an einer Konsole derart ortsfest befestigt ist, daß er Schwenkbewegungen sowohl um seine Hochachse ausführen kann als auch um eine waagrechte Achse, die senkrecht zur Richtung des von ihm ausgesandten Lichtstrahles verläuft und zwar mit Hilfe zweier Stellmotoren M. Die Schwenkbewegungen sind in den Figuren in senkrechter Richtung durch die Pfeile EL und in waagrechter Richtung durch die Pfeile Az angedeutet.

Der Projektor weist eine geeignete Aufnahmeanordnung für ein Dia 3 auf, das z.B. eine Kartendarstellung enthält und über eine Ausgangsoptik in Form eines offenen parallelen Strahlengangs 6 zu einem am Helm 1 angeordneten Empfänger ausgesandt wird. Neben der Austrittsoptik des Projektors 2 ist ein Nachführsensor 5 angeordnet, der entweder einen eigenen Lichtstrahl parallel zum offenen parallelen Strahlengang 6 in Richtung des Empfängers aussendet oder aber zur Aufnahme eines Teiles des reflektierten parallelen Strahlengangs 6 eingerichtet ist und der mittels geeigneter Betätigung der beiden Stellmotoren M für eine senkrechte bzw. waagrechte Verschwenkung des Projektors 2 sorgt, um so den Lichtstrahl 6 dem beweglichen Empfänger 10 nachzuführen.

Der Empfänger 10 ist in den Helm 1 der Bedienungsperson integriert und weist eine Eingangsoptik 7 auf, einen neben der Eingangsoptik angeordneten Reflektor 8 zur Beaufschlagung des Nachführsensors 5, eine in der Nähe eines Auges der Bedienungsperson angeordnete Ausgangsoptik 9 sowie einen zwischen der Eingangsoptik 7 und der Ausgangsoptik 9 vorgesehenen Lichtwellenleiter.

Im Projektor 2 ist ferner eine geeignete Anordnung 4 zur Erzeugung von Symbolen vorhanden, die der vom Dia 3 stammenden Kartendarstellung überlagert werden, wobei die Symbole z.B. durch LCDs, LED, Laserstrahlen oder dgl. erzeugt werden und positionsbezogen zur Kartendarstellung im Dia 3 in den Strahlengang eingeblendet werden. Dies bedeutet, daß im offenen parallelen Strahlengang 6 in Richtung des Empfängers 10 eine komplette Lagedarstellung vorhanden ist, die, da die Ausgangsoptik 9 des Empfängers 10 nur einem Auge der Bedienungsperson zugeordnet ist, zu einer monokularen Darstellung des virtuellen Bildes für die Bedienungsperson führt.

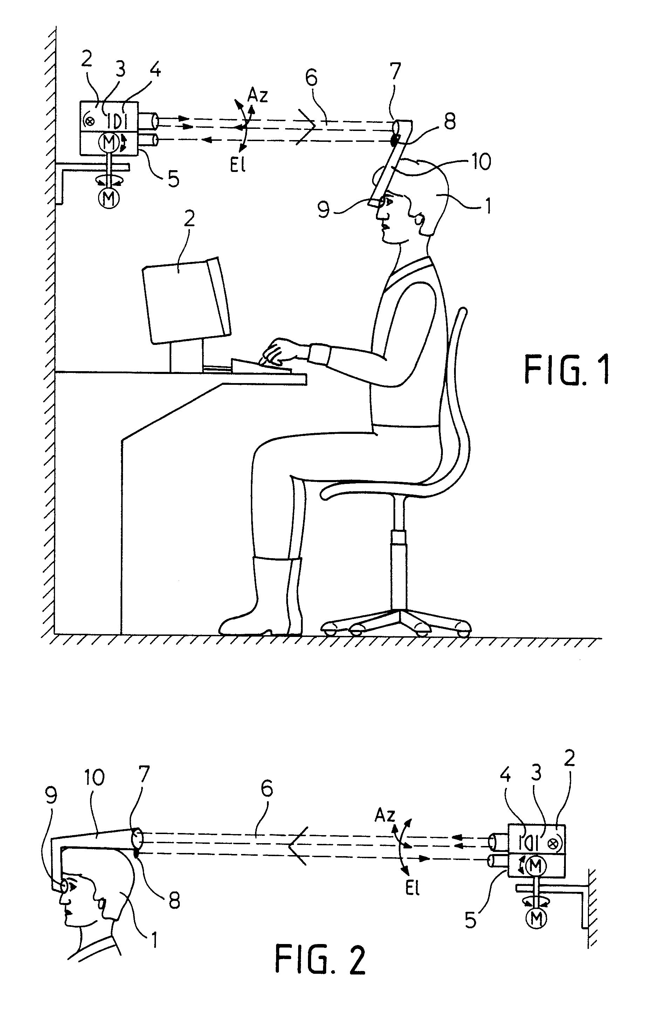

Bei dem in Figur 1 dargestellten Ausführungsbeispiel einer erfindungsgemäßen Vorrichtung zur Übertragung von optischen Informationen ist der Projektor 2 vor der Bedienungsperson, d.h. in deren Blickrichtung angeordnet. Die Eingangsoptik 7 am Empfänger 10 kann eine Sammellinse oder eine andere kollimierende Optik sein, wobei der Eintritt des parallelen Strahlengangs 6 derart gewählt ist, daß die Bedienungsperson bei schnellen Kopfbewegungen nicht geblendet wird, d.h. daß die Eingangsoptik 7 in einem vorteilhaften Abstand von etwa 20 bis 30 Zentimeter oberhalb der Augen der Bedienungsperson angeordnet wird.

Die Lichtleitung im Empfänger 10 zwischen der Eingangsoptik 7 und der Ausgangsoptik 9 kann durch Umlenkspiegel oder auch durch Umlenkprismen erfolgen, wobei das virtuelle Bild der Lagedarstellung nach maßstabgetreuer Aufweitung in der Ausgangsoptik 9 der Bedienungsperson dargeboten wird.

Der Reflektor 8 am Empfänger 10 kann ein Prismenreflektor oder ein konvexer Spiegel sein, von dem ein kleiner Teil des parallelen Strahlenganges 6 oder ein gesonderter, vom Nachführsensor 5 ausgesandter Lichtstrahl zum Nachführsensor 5 reflektiert wird, der z.B. ein Goniometer oder ein Vierquadrantendetektor ist und derart mit dem Projektor 2 verbunden ist, daß entsprechend den gemessenen Winkelabweichungen der Projektor 2 immer dem Strahleintritt der Eingangsoptik 7 nachgeführt wird. Vorzugsweise ist dabei die Wand gegenüber dem Projektor möglichst reflexionsarm.

Da die Eingangsoptik 7 am Helm 1 nicht dem parallelen Strahlengang 6 nachgeführt wird, muß die Bedienungsperson ungefähr in die entsprechende Richtung schauen, um das virtuelle Bild der Lagedarstellung zu sehen. Das entspricht einer realen Darstellung, von der ebenfalls erwartet wird, daß sie nur in einem bestimmten Blickwinkel sichtbar ist. Wenn die Bedienungsperson ihren Kopf in irgendeiner Richtung mehr als der Blickwinkel erlaubt, bewegt, verliert sie zwar das Bild, jedoch wird der Projektor über den Reflektor und den Nachführsensor weiterhin nachgeführt, so daß die Lagedarstellung sofort wieder zur Verfügung steht, sofern die Bedienungsperson ihren Kopf in die entsprechende Richtung dreht.

Bei dem in Figur 2 dargestellten Ausführungsbeispiel ist der Projektor mit seinen Bauteilen auf der Rückseite der Bedienungsperson angeordnet, so daß die Eingangsoptik 7 sowie der Reflektor 8 auf der Rückseite des Helmes 1 vorgesehen sind. Dies ermöglicht eine noch günstigere Abmessung und Gewichtsverteilung des Empfängers 10 am Helm, eine großzügere Auslegung der Eingangsoptik 7 und eine stark verminderte Störung z.B. durch die Arbeitsplatzbeleuchtung.

In beiden Fällen sind die Eingangsoptik 7 und der Reflektor 8 derart ausgelegt, daß Winkelabweichungen von ± 15° in jeder Achse zur normalen Blickrichtung möglich sind ohne daß das Bild verlorengeht.

**Ansprüche**

1. Vorrichtung zur Übertragung von optischen Informationen mit einem im wesentlichen ortsfesten Sender und einem beweglichen Empfänger, der mit einem Helm verbunden ist und der eine Eingangsoptik aufweist sowie einen zum Auge einer Bedienungsperson führenden geschlossenen Strahlengang, dadurch gekennzeichnet, daß der Sender ein Projektor (2) ist, der sowohl um seine senkrechte Achse als auch um eine waagrechte sich senkrecht zur Lichtausbreitungsrichtung erstreckenden Achse schwenkbar ist, daß der Projektor einen Nachführsensor (5) aufweist, und daß dem Empfänger (10) ein Reflektor (8) für den vom Nachführsensor (5) ausgesandten Lichtstrahl bzw. für einen Teil der optischen Informationen zugeordnet ist.

2. Vorrichtung nach Anspruch 1, dadurch gekennzeichnet, daß der Projektor eine Anordnung zur Erzeugung von Symbolen aufweist, die den eigentlichen zu übertragenden optischen Informationen überlagert werden.

3. Vorrichtung nach Anspruch 1, dadurch gekennzeichnet daß der dem Empfänger (10) zugeordnete Reflektor (8) ein Prismenreflektor ist.

4. Vorrichtung nach Anspruch 1, dadurch gekennzeichnet, daß der dem Empfänger (10) zugeordnete Reflektor (8) ein Konvex-Spiegel ist.

5. Vorrichtung nach einem der vorhergehenden Ansprüche, dadurch gekennzeichnet, daß der Empfänger nur eine einem Auge zugewandte Ausgangsoptik (9) zur Erzeugung einer monokularen Darstellung des virtuellen Bildes der zu übertragenden Informationen aufweist.

FIG. 1

FIG. 2

10 220